# EUROPEAN PATENT APPLICATION

(11) **EP 1 994 821 A2**
(43) Date of publication of application: **26.11.2008**
(21) Application number: 08007184.8
(22) Date of filing: 11.04.2008
(51) Int. Cl.: A01K 1/01

(54) **Stable arrangement and method of animal breeding on such stable arrangement**

(30) Priority: 08.05.2007 DK 200700690
(71) Applicant: Kristoffer Larsen Innovation A/S, 8721 Daugard (DK)
(72) Inventor: Larsen, Jesper Kristoffer, 8721 Daugård (DK)

(57) **Abstract**

A stable arrangement for Grange breeding of animal comprising an outwardly delimited floor having a surface of which a resting area of the floor surface constitutes a significant part of the area of the floor surface. The area has a substantially plane surface with buried drains for draining of liquids of the floor surface. The arrangement further comprises an automatic floor cleaning device which is arranged to during operation of the stable to regularly cleaning substantially all of the resting area of the floor surface. In an embodiment the arrangement is used in a method for breeding animals in which the animals are fed with wet feed which immediately before has been subject to an enzymatic treatment to alter at least some of the phosphor in the feed bound in phytin to a condition in which it may be absorbed by the digestive system of the animals.

## Description

The present invention relates to a stable arrangement and a method for breeding animals in such stable arrangement.

### BACKGROUND

There are in the known are of stable arrangements, in particular with stable arrangements for breeding of herds of pigs a number of problems of environmental character. During many years, it has been common to construct stable arrangements where the animals are kept on a slotted (grinded) floor, so that the excrements of the animals in the form of faeces and urine pass through the slots and down into a common collection arrangement under the slotted floor. The advantages with such stables are that the excrements may be removed mechanically and that the animals are not walking around in the excrements with the risk of injures to legs and feet and the risk of spreading of infections among the animals.

However, the slotted floors also have some disadvantages, in that the urine and faeces are mixed to form a slurry, where the two parts are interacting with the formation of gaseous ammonia, constituting an environmental problem for the animals as well as the surroundings, as well as being a waste of organically bound nitrogen which could be utilised as a fertiliser. Moreover, the slurry is cumbersome to split into useful subparts by means of mechanical or biological processes, and it is therefore used for spreading onto fields as a fertiliser. This requires containing arrangements for the slurry as well as large agricultural areas for receiving the slurry in that environmental regulations limits the amount of slurry to be spread on a given field area as well as the periods of the years in which the slurry may be spread.

Furthermore, the feet of the animals may be injured by walking on the slotted floors, because the slots must be sufficiently wide to allow the faeces to pass the slots, and this width coincides partially with the size of the animal's feet, in particularly of hoofs of pigs. It has also been found that it is important for the well being of the animals, in particularly for pigs, that the animal have access to material for activity and nesting, which is normally provided in the form of bedding material, such as straw, and it is thus for more and more types of animal breeding a requirement that the animals have access to bedding material. The bedding material does not pass the slots of a slotted floor and accumulates in the stable, and the combination of bedding material and slotted floors is not advantageous.

It is furthermore known to employ a thick layer of bedding material on plane floors, the co-called deep bedding, but this stable arrangement does not allow for the separation of urine and faeces.

Several attempts have been made for stable arrangements where urine and faeces are separated, typically by including drains for urine in the stable floor or under a slotted floor, but a stable arrangement that provides for a operational stable and automated separation of urine and faeces combined with the provision of bedding material has until now not been reached. One such stable arrangement is known as Kildestald at Rask Mølle, Denmark.

WO 2005/084421 (PRAKTIJKONDERZOEK VEEHOUDERIJ) describes an alternative arrangement in form of a house for animals, for instance cattle, provided with a sand litter pack in which urine can drain away and on which faeces can remain behind, wherein above the sand or litter pack at least one automatically operating manure gripper is provided which can be driven by a faeces detection system. The house is further equipped with a draining system underneath the sand or litter pack for the discharge of urine.
This arrangement is very troublesome to work with especially because the inconstancies of the sand or litter pack.

It is therefore an object of the present invention to provide a stable arrangement and a method of animal breeding, wherein the above-mentioned disadvantages of the known are may be avoided.

### BRIEF DESCRIPTION OF THE INVENTION

With the present invention is provided a stable arrangement for free-range breeding of animals, comprising an outwardly delimited floor having a surface of which a resting area of the floor surface constitutes a significant part of the area of the floor surface, the resting area having a substantially plane surface with buried drains for draining of liquids off the floor surface, where the stable arrangement further comprises an automatic floor cleaning device, which is arranged to during operation of the stable to regularly cleaning substantially all of the resting area of the floor surface.

The total floor area of the stable may constitute from about 3 square meters and larger, such as 2000 square meters for very large herds of animals, in particular of pigs, can be used for cattle/cows, goats.
The floor is delimited in such a manner that animals present on the floor cannot leave the floor by itself due to the delimitation, which may be constituted by fences, walls, etc.

The resting area constitutes preferably at least 50 % of the delimited floor surface, in a further preferred embodiment at least 60 % and more preferred at least 75 % of the delimited floor surface, which also may comprise other arrangements and devices, such as a feeding arrangement, in particular an automated feeding arrangement for individual feeding of the animals, and a scraping area having means for removal of waste, where the automated floor cleaning device may deliver the removed faeces and possibly the bedding material.

By the term buried drains is understood drains with an upper surface being substantially in the same plane as the adjacent floor surface or slightly below that, i.e. typically less than 10 cm below the adjacent floor surface and preferably less than 5 cm below, where the upper surface of the drain comprises openings, such as slots or circular holes, e.g. with a minimum opening dimension in the range of 2 to 15 mm, so that urine may pass the openings but solid parts of faeces and bedding material is substantially prevented from passing the openings.

With such stable arrangement an efficient source separation of faeces and urine from the animals may be accomplished with the possibility of having bedding material on the floor of the stable because the bedding material together with the possible urine that may be absorbed in the bedding material is regularly removed by the automated cleaning together with the faeces. With the regularly cleaning of the floor surface, the openings of the drains are kept open free of clogging with solids parts of faeces and bedding material, and the draining of urine off the floor may take place continuously and unhindered.

By the source separation is furthermore accomplished that the excreta of the animals may be used instead of being a waste product, which is cumbersome and expensive to handle and dispose of, in that the pure urine or liquid manure may be used as a fertiliser or may be used as a raw material for the refinement of urea, which is an ingredients in a number of industrial products. The faeces admixed with the bedding material may be e.g. dried, possibly preceded by a composting process and/or a pressing process, and then may be used as a solid fuel due to the high content of cellulose and other combustible components. Equipment for these processes is well-known to the skilled person.

The regularly cleaning includes preferably that substantially all of the resting area of the floor surface is cleaned at least once every three days, preferably at least once every day. The cleaning may be conducted continuously by means of e.g. a self-propelled cleaning robot following a predetermined route along the stable floor, or the frequency of the cleaning for the individual parts of the resting area of the floor may be determined from experience by collecting data by means of the floor cleaning device regarding which parts of the floor surface that mainly are used by the animals for defecation. In another arrangement according to present invention, the floor cleaning device is arranged on an known crowding equipment, e.g. as disclosed in EP 1 552 738 A2, by means of which the animals are driven through the stable to an automatic feeding device so as to make sure that all the animals within the stable reaches the feeding device within a given period of time, such as one day.

In an advantageous embodiment, the automatic floor cleaning device comprises brushes, which during the cleaning process are in contact with the floor surface, such as rotating cylindrical brushes. Hereby a thorough cleaning of the floor surface is ensured and the openings of the drains are cleaned of solid material so that the urine unhindered may be drained off the stable floor. Alternatively or in combination herewith the floor cleaning device may comprise one or more scrapers having a lower flexible edge that during operation of the device scrapes the floor surface. A cleaning device that alone comprises a scraper is more efficient on a floor surface that is smooth, possibly a painted surface, and the upper surfaces of the drains should be designed so that they will be cleaned and kept open by means of the scraper.

The automatic floor cleaning device may furthermore comprise nozzles and a water supply for supplying pressurised water, possibly with a content of cleaning agents and/or disinfection agents, to the nozzles during the cleaning operation, the nozzles being directed towards the floor surface for the cleaning thereof. Such nozzles may be utilised alone or in combination with the aforementioned brushes and/or scrapers. It is advantageous if the draining system comprising the mentioned drains in the floor is designed to separate the pure urine drained off the floor from the water from the cleaning operation so that the collected urine is not thinned and polluted by the water from the cleaning operation and parts of the faeces being dissolved or suspended in the cleaning water. The floor cleaning device may furthermore comprise means, such as suction means, for collecting at least a part of the cleaning water and possibly also a device for collecting the air containing droplets generated by the cleaning water so as to remove the droplets from the air of the stable. The advantages of a wet cleaning of the floor are that the amount of bacteria and other infectious germs may be reduced most efficiently, whereby the risk of diseases spreading among the animal in the stable arrangement may be reduced significantly.

The stable arrangement is particularly suited for the use of bedding material on the floor thereof, and in a preferred embodiment of the stable arrangement according to the present invention, it comprises an automatic bedding material spreading device arranged to spread bedding material, such as straw, sphagnum or wood shavings, onto a part of the resting area of the floor surface regularly during operation of the stable arrangement.

The automatic bedding material spreading device is preferably arranged to spread bedding material onto a significant part of the resting area of the floor surface, preferably at least onto 50 % of the resting area, such as at least 75 % thereof.

The regularly spreading of bedding material includes preferably that bedding material is spread at least once every three days, preferably at least once every day and more preferred at least twice every day. It is an advantage the spreading of bedding material is coordinated with the cleaning of the floor, e.g. that the bedding material spreading device is made integral with the floor cleaning device, so that bedding material is spread onto the floor surface immediately after it is cleaned.

It is furthermore an advantage if the resting area has a slope of 1-8 degrees, preferably 2-5 degrees to horizontal, and wherein the drains extend substantially perpendicularly to the sloping direction, so that the slope of the floor surface has the effect that the urine by the force of gravity runs towards the drains whereby the source separation of urine and faeces is more efficient. The whole of the floor may have a slope in the same direction or it may be divided into two parts that have a slope towards a common scraping area as shown below, or the floor may be formed with ridges so that the urine will run towards the closest drain in the floor.

The drains extend preferably substantially in parallel with a mutual distance of less than 5 meter, preferably in the range of 0.5 and 3 meter.

The cleaning equipment can be a robot. It drives around and sucks up faeces and straw from the floor. Empties itself and fills up water. Calculates a route where there is the greatest need to be cleaned

The present invention relates furthermore to a method of breeding animals in a stable arrangement according to any of the preceding claims, comprising the step of feeding the animals with wet feed which immediately before being fed to the animals has been subjected to an enzymatic treatment to alter at least some of the phosphor in the feed bound in phytin to a condition, where it may be absorbed by the digestive system of the animals. Other bound minerals in the feed may be released in a similar manner. Hereby, the amount of phosphor in the faeces may be reduced significantly as compared to the more common method of feeding the animal, where phosphor and other minerals are added to the feed because in particular pigs may not or only to a very limited extend absorb the phosphor bound in the phytin of the feed in their intestine tract. The low-phosphorous faeces and urine are more advantageous to use as fertiliser, in that most agricultural areas today are saturated with phosphor and can hardly take up any more, but also in dried form as a solid fuel in that the combustion of the dry low-phosphorous faeces may be carried out with less environmental restrictions and requirements, such as cleansing of the smoke. Finally, the ashes from the combustion may readily be used as a mineral supplement to agricultural fields or in other use due to the low content of phosphor.

The present method is particularly useful for breeding of pigs, in particular pigs for slaughter.

It is particularly advantageous that the animals are present in the stable arrangement during the conduction of the cleaning operation.

### BRIEF DESCRIPTION OF THE FIGURES

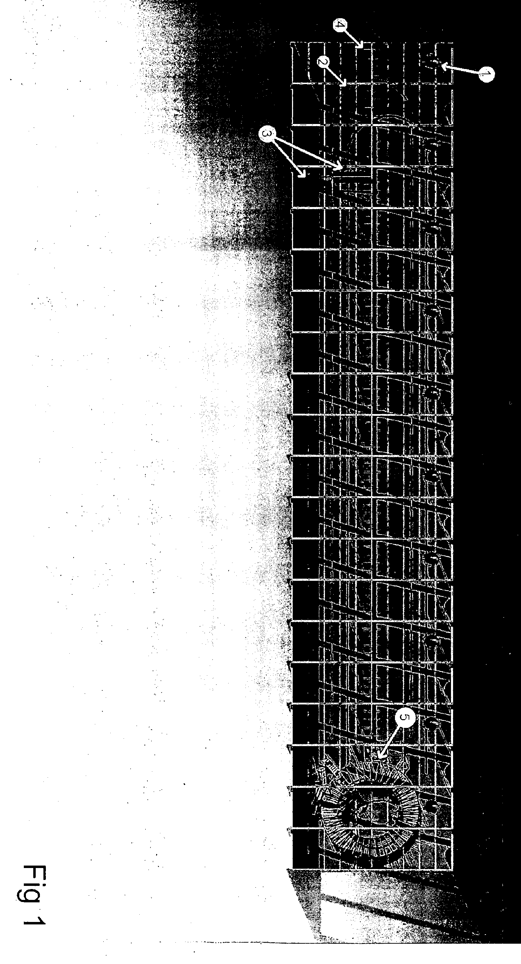

An example of a stable arrangement according to the present invention is illustrated with the accompanying figures of which
Fig. 1 shows a stable arrangement seen from above,

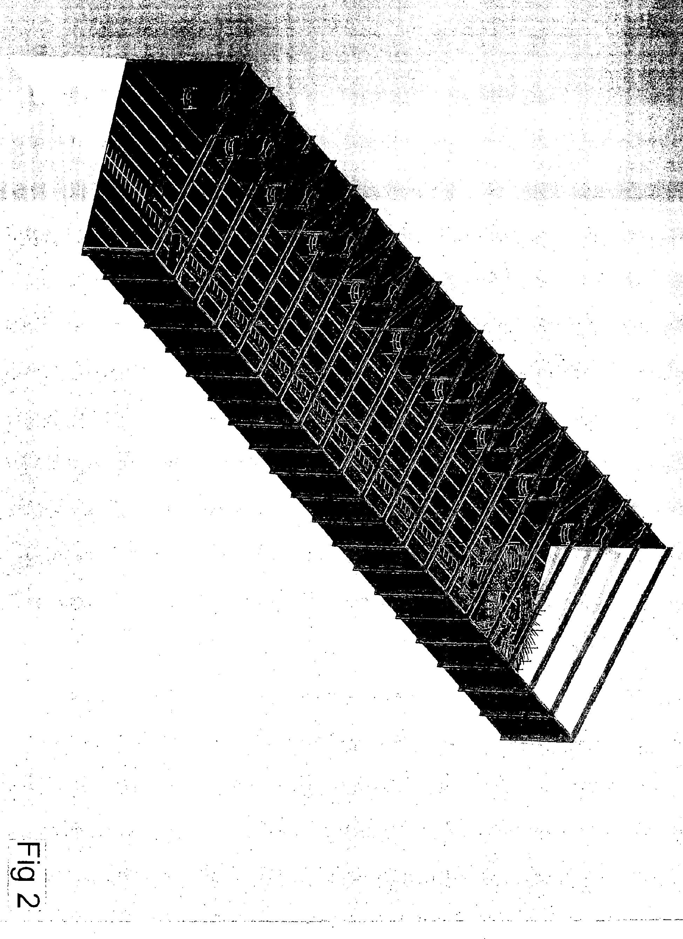

Fig. 2 shows the stable arrangement in perspective as seen from above,

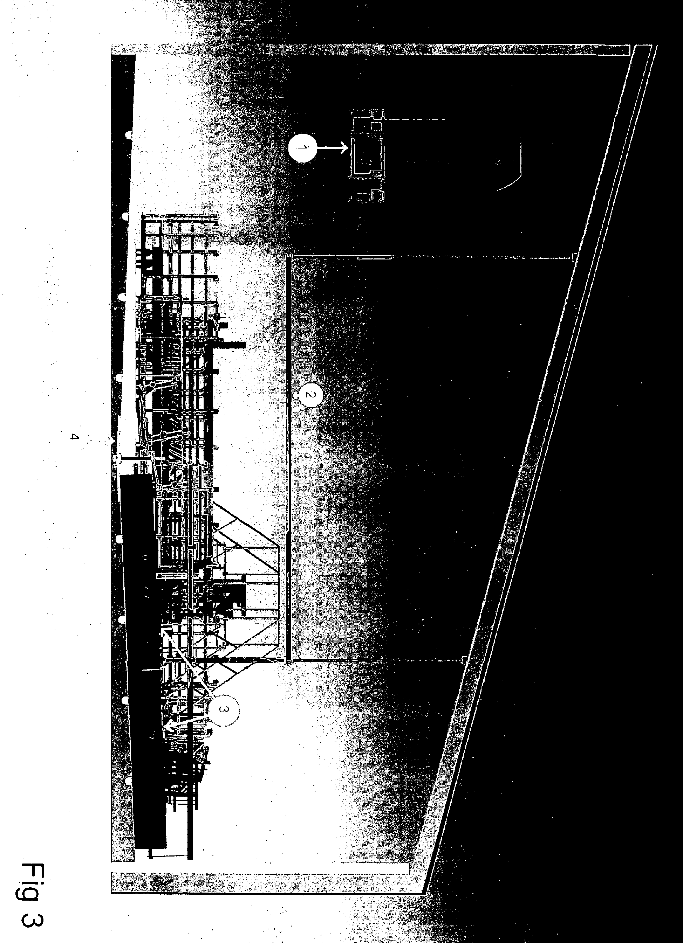

Fig. 3 shows a second perspective view of the stable arrangement, where the automatic cleaning device is shown more clearly,

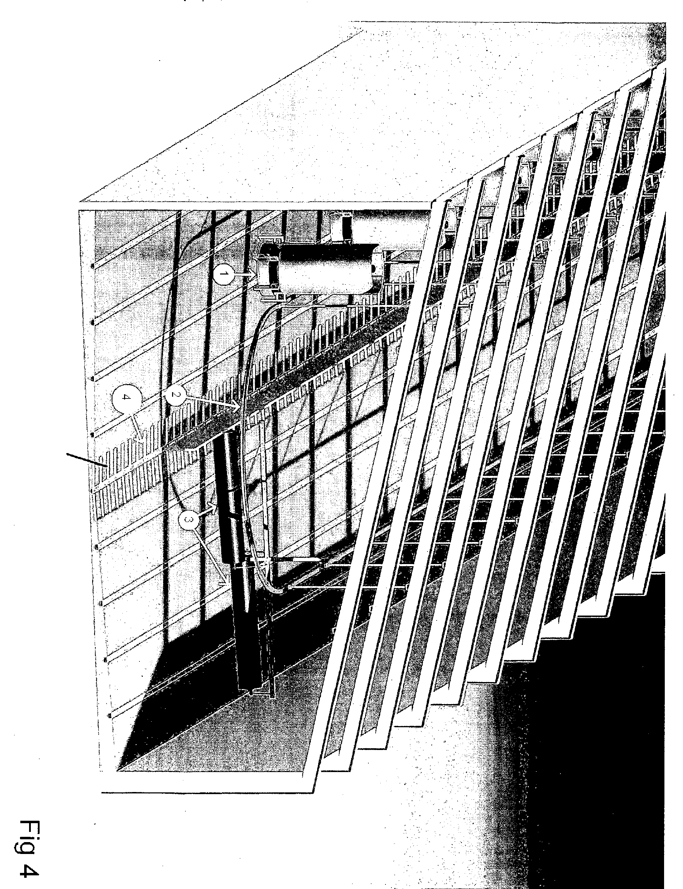

Fig. 4 shows the stable arrangement in cross section through the longitudinal direction of the stable, and

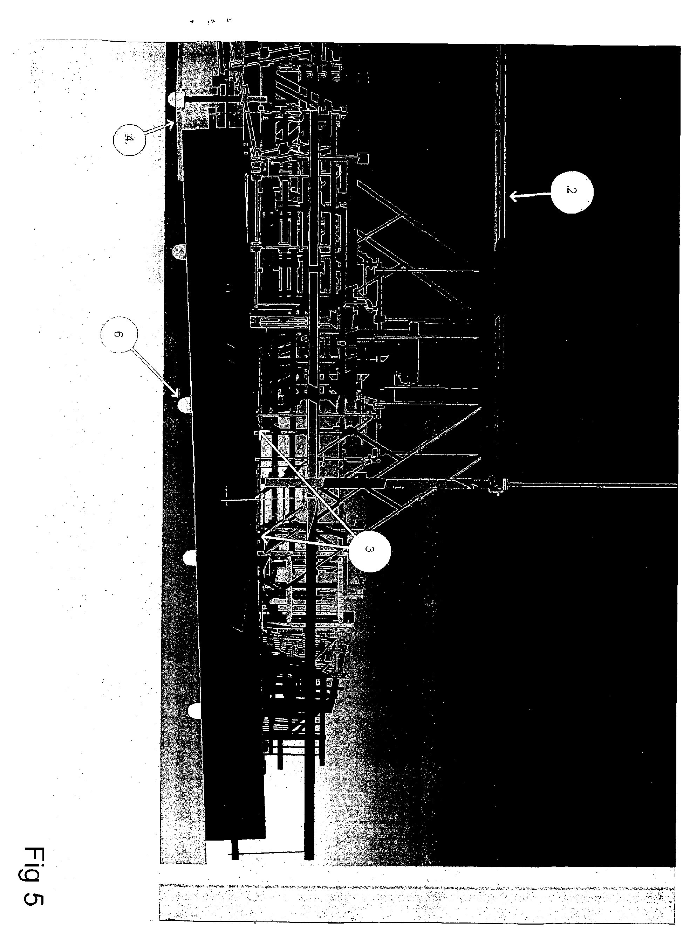

Fig. 5 shows a detail of Fig. 4 with the cleaning device.

The example as illustrated with the figures is included to exemplify the present invention to the skilled person and is not to be regarded as delimiting of the scope of protection of the enclosed claims.

### DETAILED DESCRIPTION OF AN EMBODIMENT

The accompanying figures show a stable arrangement comprising a number of air cleaning devices 1 for the removal of gaseous ammonia and dust from the stable air, a rail 2 suspended over the stable floor so that the cleaning device 3, which also has the function of a crowding device for crowding the animals towards the automatic feeding arrangement 5, may hang down from the rail 2. Along the middle in the longitudinal direction is situated a scraping area 4 that may comprise a slotted floor or other opening for the bedding material and faeces that are swept there by the cleaning device 3 for removal in a known manner.

The floor 7 of the stable arrangement is sloping from both side against the scraping area 4 at an angle of 4 degrees and the buried drains 6 are arranged in the floor with a mutual distance of 1.5 meter, which on the top surface has a plane grate which is in level with the surrounding floor surface and which has round holes of a diameter of about 12 mm, so that urine will pass easily but bedding material and faeces will be retained on the floor surface to be removed by the automated cleaning device, however the holes are not so narrow that the will become clogged easily by the solid materials. The drains 6 extend along the stable floor, so that the urine at the most will run 1.5 meter before reaching a drain 6.

The cleaning device 3 comprises two brush cylinders, that are advanced along the rail 2 and are slightly slanted with respect to the longitudinal direction of the stable arrangement, so that bedding material and faeces are swept to the scraping area 4. On the back of the cleaning device 3 is a bedding material spreader (not shown) arranged, which right after the cleaning automatically spreads new bedding material onto the floor.

In the middle of the scraping area 4 is arranged a longitudinal extending wall 2, which at the ends of the stable arrangement allows the cleaning device 3 to pass, whereby the cleaning device 3 operates as a crowding mechanism for crowding the animals towards the automatic feeding arrangement 5, where the animals are identified and feed is measured out individually for the individual animal with respect to amount and composition. By using a crowding mechanism a surveillance of the well-being of the animals is achieved by means of the feeding arrangement 5 which comprises means for detecting the amount of feed actually consumed by the individual animal and other characteristics, in particular the weight of the animal.

In connection with the feeding arrangement 5 is provided a pre-treatment equipment for treatment of the feed prior to the distribution thereof to the animals, where phytin rich parts of the feed, in particular cereal products but also rape etc. are admixed with lukewarm water and enzymes, which are known and let the mixture rest at e.g. about 50 grader Celsius from 10 minutes to 6 hours, during which period the enzymes are allowed to alter parts of the phytin whereby the phosphor bound therein becomes available to the pig's digestive system. Thus, the addition of a phosphor supplement to the feed may be prevented and the previously mentioned advantages may be obtained.

## Claims

1. A stable arrangement for free-range breeding of animals, comprising an outwardly delimited floor having a surface of which a resting area of the floor surface constitutes a significant part of the area of the floor surface, the resting area having a substantially plane surface with buried drains for draining of liquids off the floor surface,
the stable arrangement further comprising an automatic floor cleaning device, which is arranged to during operation of the stable to regularly cleaning substantially all of the resting area of the floor surface.

2. Stable arrangement according to claim 1, wherein the resting area constitutes at least 50 % of the delimited floor surface.

3. Stable arrangement according to claim 1 or 2, wherein the regularly cleaning includes that substantially all of the resting area of the floor surface is cleaned at least once every three days, preferably at least once every day.

4. Stable arrangement according to any of claims 1-3, wherein the automatic floor cleaning device comprises brushes, which during the cleaning process are in contact with the floor surface.

5. Stable arrangement according to any of claims 1-4, wherein the automatic floor cleaning device comprises nozzles and a water supply for supplying pressurised water to the nozzles during the cleaning operation, the nozzles being directed towards the floor surface for the cleaning thereof.

6. Stable arrangement according to any of claims 1-5, further comprising an automatic bedding material spreading device arranged to spread bedding material onto a part of the resting area of the floor surface regularly during operation of the stable arrangement.

7. Stable arrangement according to claim 6, wherein the automatic bedding material spreading device is arranged to spread bedding material onto a significant part of the resting area of the floor surface, preferably at least onto 50 % of the resting area.

8. Stable arrangement according to claim 6 or 7, wherein the regularly spreading of bedding material includes bedding material is spread at least once every three days, preferably at least once every day.

9. Stable arrangement according to any of claims 6-8, wherein the bedding material spreading device is made integral with the floor cleaning device, so that bedding material is spread onto the floor surface immediately after it is cleaned.

10. Stable arrangement according to any of the preceding claims, wherein the resting area has a slope of 1-8 degrees, preferably 2-5 degrees to horizontal, and wherein the drains extend substantially perpendicularly to the sloping direction.

11. Stable arrangement according to any of the preceding claims, wherein the drains extend substantially in parallel with a mutual distance of less than 5 meter, preferably in the range of 0.5 and 3 meter.

12. Method of breeding animals in a stable arrangement according to any of the preceding claims, comprising the step of feeding the animals with wet feed which immediately before being fed to the animals has been subjected to an enzymatic treatment to alter at least some of the phosphor in the feed bound in phytin to a condition, where it may be absorbed by the digestive system of the animals.

13. Method according to claim 12, wherein the animals are present in the stable arrangement during the conduction of the cleaning operation.
